# EUROPEAN PATENT APPLICATION

(11) **EP 2 317 616 A1**
(43) Date of publication of application: **04.05.2011**
(21) Application number: 09174588.5
(22) Date of filing: 30.10.2009
(51) Int. Cl.: H02B 13/025

(54) **Electrical Installation with Heat Transfer Assembly**

(71) Applicant: Eaton Industries (Netherlands) B.V., 7559 SC Hengelo (NL)
(72) Inventor: Lammers, Arend, 7558 TV Hengelo (NL); Schoten, Frederik, 7443 TS Nijverdal (NL); Geusendam, Paulus, 7559 NB Hengelo (NL); Van De Ven, Nico, 7552 JB Hengelo (NL)
(74) Representative: Tabeling, Marcella M.J.

(57) **Abstract**

The invention relates to an electrical installation, such as a switchgear, comprising an enclosure (17), an element under electrical tension located in the enclosure (17), and a heat transfer assembly (3) thermally connected to the electric element, in which the heat transfer assembly part (3) comprises a heat pipe (1) having in use an evaporator part directed to the electric element of the installation, and an electrically insulating body (5) arranged between the heat pipe (1) and the electric element, wherein the evaporator part of the heat pipe (1) is located inside the enclosure (17) of the electrical installation.

## Description

### Field of the invention

The present invention relates to an electrical installation, such as a switchgear, comprising an enclosure, an element under electrical tension located in the enclosure, and a heat transfer assembly thermally connected to the electric element.

### Prior art

German patent application DE-A-199 35 658 discloses a device for transferring heat from a gas insulated switchgear, in which a conductive part (e.g. connected to a bus bar) is connected to a conductor outside an enclosure using an electrically insulating and thermally conductive body penetrating the enclosure. In this device, a thermal conductor is positioned inside the enclosure, the body is attached and located in an aperture in the wall of the enclosure, and a further thermal conductor is positioned outside the enclosure. As a result, electrical insulation is only achieved at the wall of the enclosure.

International patent application WO 2006/053452 discloses an insulating hollow body for a cooling high-voltage loadable element, comprising a heat pipe structure with an insulating tube. Additional layers (diffusion barrier and vapor layer) are needed to insure proper insulation.

European patent application EP-A-1 898 505 discloses a switchgear comprising heat pipes to transport heat to a condenser outside the cabinet. The vapor/liquid channel to the condenser comprises an insulating tube to electrically insulate the condenser from the actual heat pipe which is connected to live current carrying elements.

German patent application DE-A-39 05 875 discloses a heat pipe structure for cooling power semiconductors. The heat pipe comprises a heat source part and a heat sink part, which are insulated from each other by an insulating tube.

### Summary of the invention

The present invention seeks to provide a device for transferring heat away from a hot spot caused by an element under electrical tension in an electrical installation. The device should be efficient in transferring heat, but also cost-effective.

According to the present invention, a heat pipe assembly according to claim 1 is provided. This arrangement provides for a very efficient yet cost-effective solution for transferring heat away from a hot spot in an electrical installation.

Further advantageous embodiments are provided in the dependent claims.

The heat pipe is thermally connectable to the current carrying element while electrically insulated therefrom by means of an electrically insulating body. The electrically insulating body is preferably located as close as possible, more preferably directly in contact with the electrical element under tension. In this way the heat pipe is located as closest as possible at the hot spot in the installation and the thermal energy transfer through the heat pipe may most efficient, as it evaporator side is located at a higher temperature. Furthermore, electrical insulation is provided closer to the hot spot, allowing easier construction and assembly.

The heat transfer assembly comprises attachment elements in a further embodiment for mounting the heat pipe under pressure to the electrical element under tension. The attachment elements may comprise bolt arrangements using one or more bolts to apply pressure at the various interfaces to allow a more efficient heat transfer by preventing air between the different structural elements.

In further embodiments, the electrically insulating body comprises a ceramic material, such as Al₂O₃ or AlN. These materials provide an excellent thermal conductivity, while at the same time being excellent electrical insulators. To obtain even better properties for the entire heat transfer assembly, thermally conductive paste may be applied to fill possible existing gaps between the different materials.

The heat transfer assembly may further comprise a heat sink, connected to the low temperature side (i.e. condenser part) of the heat pipe. This provides for an improved efficiency and better heat transfer under a wide range of operational characteristics.

The heat transfer assembly may be positioned entirely inside an enclosure of the electrical installation to use the internal fluid as coolant medium for the heat pipe. Furthermore, the heat pipe may be in contact with the enclosure (grounded), and/or may be connected to a heat sink located outside of the enclosure.

### Short description of drawings

The present invention will be discussed in more detail below, using a number of exemplary embodiments, with reference to the attached drawings, in which
Fig. 1 shows a schematic drawing of a switchgear comprising a heat transfer assembly in accordance with the present invention;
Fig. 2 shows a cross sectional view along a longitudinal axis of a first embodiment of the heat transfer assembly;
Fig. 3 shows a cross sectional view along a longitudinal axis of a second embodiment of the heat transfer assembly; and
Fig. 4 shows a cross sectional view along a longitudinal axis of a third embodiment of the heat transfer assembly.

### Detailed description of exemplary embodiments

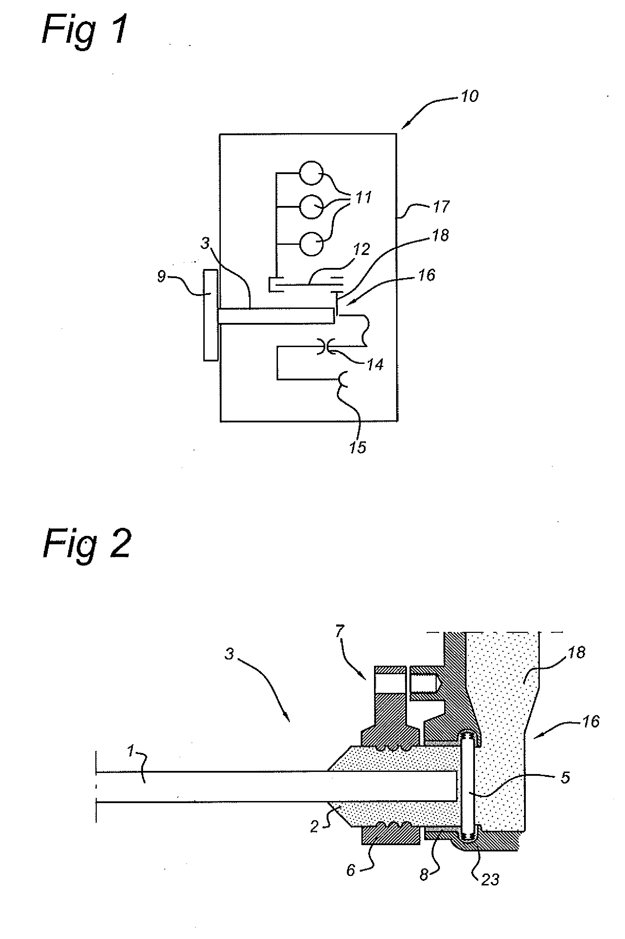

The embodiments of the heat transfer assembly 3 according to the present invention may be applied in electrical installation, such as medium voltage switchgear 10, which are shown very schematically in Fig. 1. The switchgear 10 comprises an enclosure 17, which is usually made of metal and which is grounded. The switchgear 10 comprises in these examples a number of interconnected elements under electrical tension which are at a high electrical potential and may carry current. The interconnected elements may comprise, but are not limited to, a bus bar system 11, a disconnector 12, a vacuum switch 14 and a connecting terminal 15. At a number of locations inside the switchgear 10, hot spots 16 may occur due to current flowing through the elements. An exemplary position of a hot spot 16 is between the disconnector 12 and the vacuum bottle 14, where a number of elements under electrical tension (or electric conductors) comprise bend parts, some of which may have smaller cross sections.

One of the elements used in the heat transfer assembly 3 is a heat pipe 1, which as such is well known in the art. Normal heat pipes 1 have a very good thermal conductivity (typically 100 to 500 times better than pure copper of the same dimensions), but they are not electrically insulated. To be able to use heat pipes in electrical installations, such as medium voltage switchgear, where the heat, generated by the current, has to be transferred away from the conductor element of the system, electrical insulation is necessary.

In the embodiment shown in Fig. 1, the heat transfer assembly 3 is positioned to transfer heat from the hot spot 16 to a heat sink 9 positioned outside the enclosure 17. This allows to efficiently using the air outside the enclosure 17. In an alternative embodiment the heat transfer assembly 3 is positioned entirely inside the enclosure 17 to transfer heat from the hot spot 16 to a lower temperature area inside the enclosure 17. This allows to use the fluid inside the enclosure 17 (e.g. air or SF₆) to further transfer the heat from a relatively warm part of the heat transfer assembly 3 to the relatively cold enclosure 17, and via the enclosure to its surroundings. As an even further alternative, the heat transfer assembly 3 can be in mechanical contact with the enclosure 17 in order to use the enclosure 17 as a heat sink.

According to a first embodiment of the present invention shown in Fig. 2, the heat transfer assembly 3 comprises an electrically insulating body 5 which is capable of transfer heat to the heat pipe. The body 5 has preferably the form of a disc like element in order to reduce the distance between the heat pipe 1 and the electric conductor 18, and to be able to place the heat pipe as close as possible at the hot spot 16.. The electrically insulating characteristic of the electrically insulating body 5 allows to insulate the heat transfer assembly 3 from the potentially high voltages on the conductor element 18, or even to hold the largest part of the heat transfer assembly 3 at ground potential. Further, due to the shape of body 5, the cost of material can be kept low and allows easy manufacturing out of ceramic materials. Ceramic materials such as Al2O3 and AlN are known for their electrical insulating characteristics but also have a relatively high thermal conductivity.

The disc body 5 is mounted in direct mechanical and thermal contact with the electric conductor 18 by means of a bushing 23. This bushing 23 is preferably resin casted while the body 5 is held in contact with the electric conductor 18. Alternatively, the body will be mounted in the bushing 23. The resin material could be an epoxy as used conventionally in switchgear 10, or alternatively a electrically insulating ceramic material with good thermal conductivity, such as Al2O3 or AlN. A sleeve 8 of rubber or similar elastic material is placed around the disc body 5 before it is casted in bushing 23. Despite any difference in thermal expansion between the different structural elements 2, 5, 18 and 23, sleeve 8 will ensure that the disc body 5 will still electrically insulate the grounded parts 1, 2 from the conducting parts 18, 23.

Further in the embodiment of Fig 2, a heat pipe 1 having an elongated shape is used in the heat transfer assembly 3. The heat transfer assembly 3 further comprises a mounting element 2 of conductive material such as copper, which is fixedly attached to the heat pipe 1. The mounting element 2 is adapted to fit in the sleeve 8 accommodated in bushing 23, and to make contact with the electrically insulating body 5 over its end surface. The mounting element 2 is at least partly surrounded by a bushing 6, which may be casted from any suitable material, such as epoxy or aluminum, or which may be formed in a different way from any suitable material. The bushing 6 is used to attach the combination of mounting element 2 and heat pipe 1 to the electric conductor 18. The heat pipe 2 is preferably held at a predefined electrical potential, e.g. ground potential.

The bushings 6 and 23 are provided with holes 7 for receiving screws or bolts. The hole in bushing 23 is provided with thread. In this manner, it is possible to mount the heat transfer assembly 3 to the electric conductor 18 with pre-tensioning, in order to provide as efficient as possible thermal conductive contact between the electric conductor 18, electrically insulating body 5, and mounting element 2. In order to improve the heat transfer characteristic of the entire heat transfer assembly 3, heat conductive paste may be used at the interfaces between conductor 18 and electrically insulating body 5, and/or between electrically insulating body 5 and mounting element 2.

In this embodiment, the electrically insulating body 5 is mounted almost directly on the hot spot 16. This allows to have a very efficient heat transfer from hot spot 16 to heat pipe 1 (and to a further heat sink) as the heat pipe 1 is at a higher temperature near the hot spot 16. Furthermore, this construction requires using as little as possible number of elements and allows very easy construction.

The body 5 is electrically insulating and thermal conductive. Examples of materials having such characteristics include ceramic materials, such as Al₂O₃ or AlN. Also, various types of plastic materials, such as epoxy (e.g. Aratherm®) can be used.

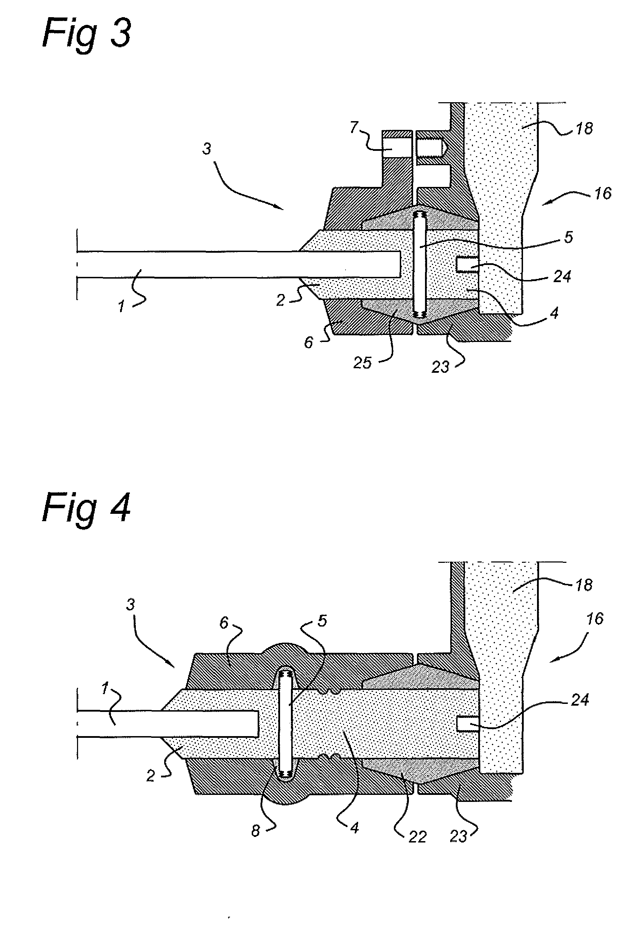

In Fig. 3, a further embodiment of the heat transfer assembly 3 is shown in a cross sectional view. Similar elements as the ones described for Fig 2 embodiment are indicated with same reference numbers. In this embodiment, the electric conductor 18 is provided with bushing 23, provided with a conically shaped opening facing away from the electric conductor 18.

The heat transfer assembly 3 comprises in this embodiment a heat pipe 1, which is attached to the mounting element 2. The mounting element 2 is in contact with one side of the electrically insulating body 5 and mounting element 4 is in contact with a second side of the electrically insulating body 5, the second side being opposite to the first side. The mounting element 4 is attached to the electric conductor 18 by a bolt or screw connection (a thread hole 24 shown in Fig 3). The bushings 6, 23 are attached to each by means of bolt connections 7 for pre-tensioning the mounting elements 2, 4 against the disc 5. A sleeve 25 is placed between bushings 6, 23. This sleeve 25 is preferably made of rubber. It provides an electrical insulation between grounded parts 1, 2 on the one hand and conducting parts 4, 18 on the other hand. Thereby this sleeve 25 will ensure a good thermal contact between mounting element 2 and body 5, and between mounting element 4 and body 5, even if the thermal expansion coefficients of these elements are different. The sleeve 25 is provided with a conical end shape, congruent to the conically shaped opening of the bushing 23. In operation, the mounting element 4 is thus in thermal contact with the electric conductor 18.

In Fig. 4 a third embodiment of the heat transfer assembly 3 is shown in a cross sectional view. In this embodiment, again the electric conductor 18 is provided with a bushing 23 (e.g. epoxy material), provided with a conically shaped opening facing away from the electric conductor 18. Furthermore, a mounting element 4 is attached to the electric conductor 18 similarly as in the embodiment according to Fig 3. Similar elements as of the previous two embodiments are indicated with same reference numbers.

The electrically insulating body 5 is held in contact with the mounting elements 2, 4 using bushing 6, preferably casted from epoxy material. The electrically insulating body 5 is surrounded by sleeve 8 for the same purpose as described for the Fig 2 embodiment. A sleeve 22 is provided between bushing 6 and 23. This sleeve 22 surrounds the mounting element 4. This sleeve 22 has to be made from electrically insulating material to provide an electrically insulating seal for the conducting parts 18, 4 to the outside.

This third embodiment according to Fig. 4 allows pre-assembling the disc 5 with the grounded parts 1, 2, 6 and 8 of the heat transfer assembly 3 and mounting this assembly to the conducting assembly which consists of electric conductor 18, mounting element 4, sleeve 22 and bushing 23.

Although a mounting element 4 is used in the embodiments of Fig 3 and 4 to attach to the electric conductor 18, the electrically insulating body 5 is still relatively close to the hot spot 16. When the mounting element 4 is made of highly thermal conductive material (e.g. a metal like copper), still relatively good heat transfer characteristics may be obtained.

It will be clear to the skilled person that further modifications and variations are possible for the detailed constructions of the heat transfer assembly, which are within the scope of protection of this application, as defined by the features of the appended claims. E.g. the attachment elements 7 may also be implemented differently, e.g. by clamping devices.

## Claims

1. Electrical installation, such as a switchgear, comprising an enclosure (17), an element under electrical tension located in the enclosure (17), and a heat transfer assembly (3) thermally connected to the electric element, in which the heat transfer assembly part (3) comprises:
- a heat pipe (1) having in use an evaporator part directed to the electric element of the installation, and
- an electrically insulating body (5) arranged between the heat pipe (1) and the electric element,
wherein the evaporator part of the heat pipe (1) is located inside the enclosure (17) of the electrical installation.

2. Electrical installation according to claim 1, wherein the heat pipe (1) is located completely inside the enclosure (17) of the installation.

3. Electrical installation according to claim 1 or 2, wherein the electrically insulating body (5) is formed by a disc-like element having two lateral surfaces, wherein the first lateral surface is in thermal contact with the heat pipe (1) and wherein the second lateral surface is in thermal contact with the electric element.

4. Electrical installation according to claim 1, 2 or 3, wherein the electric element comprises an electric conductor (18) of the electrical installation, and wherein the insulating body (5) is mounted in direct thermal and mechanical contact with the electric conductor (18).

5. Electrical installation according to one of the claims 1, 2 or 3, wherein the electric element comprises an electric conductor (18) of the electrical installation and a mounting element (4) attached thereto, and wherein the electrically insulating element (5) is in thermal and mechanical contact with the mounting element (4).

6. Electrical installation according to one of the claims 1-5, wherein the heat pipe (1) is accommodated in a first bushing (6) made of electrically insulating material, said first bushing being attached under pre-tension to the electric element.

7. Electrical installation according to one of the claims 1-6, wherein a second bushing (23) made of electrically insulating material is fixed to the electric conductor (18).

8. Electrical installation according to claim 6 or 7, wherein the electrically insulating body (5) together with the heat pipe (1) is accommodated in the first bushing (6).

9. Electrical installation according to claims 6 and 7, wherein the electrically insulating body is located between the first bushing (6) and second bushing (23).

10. Electrical installation according to claims 6 and 7, wherein the electrically insulating body is accommodated in the second bushing (23).

11. Electrical installation according to any of the claims 6-10, wherein the first bushing (6) and/or second bushing (23) is/are made of cast resin.

12. Electrical installation according to one of the claims 1-11, wherein the material of the electrically insulating body (5) is selected from the group of materials having relatively good thermal conductive properties, said group comprising epoxy materials and ceramic materials.

13. Electrical installation according to claim 12, wherein material of the electrically insulating body (5) is selected from the group of ceramic materials comprising AlN or A1203.
